# EUROPEAN PATENT SPECIFICATION

(11) **EP 2 368 729 B1**
(45) Date of publication and mention of the grant of the patent: **22.08.2012**
(21) Application number: 11150980.8
(22) Date of filing: 14.01.2011
(51) Int. Cl.: B60G 21/00, B62K 5/04

(54) **Front two-wheeled saddle-ride-type vehicle**
Sattelfahrzeug mit zwei Vorderrädern
Véhicule à monture de selle à deux roues avant

(30) Priority: 23.03.2010 JP 2010066699
(43) Date of publication of application: 28.09.2011
(73) Proprietor: Honda Motor Co., Ltd., Tokyo 107-8556 (JP)
(72) Inventor: Kawasaki, Yohei, Saitama 351-0193 (JP); Sugita, Haruomi, Saitama 351-0193 (JP); Kashiwai, Mikio, Saitama 351-0193 (JP); Kobayashi, Hiroyoshi, Saitama 351-0193 (JP); Ueda, Shingo, Saitama 351-0193 (JP)
(74) Representative: Liska, Horst

(56) References cited:
- EP-A1- 1 391 374
- EP-A2- 1 484 239

## Description

### Technical Field

The present invention relates to a front two-wheeled saddle-ride-type vehicle which has front wheels on left and right sides thereof respectively.

### Background Art

Conventionally, there has been known a saddle-ride-type vehicle which has front wheels on left and right sides thereof respectively (see Japanese Patent Application No. JP-A-2004-359232, for example). In Japanese Patent Application No. JP-A-2004-359232, the saddle-ride-type vehicle includes two front wheels and one rear wheel, two front wheels which are steered by a handle are supported on left and right side tubes by way of suspensions respectively, and the left and right side tubes are connected to each other by way of cross bars which are arranged above and below the side tubes.

A front two-wheeled straddle-ride-type vehicle according to the preamble of claim 1 is known from EP 1 391 374 A1.

### Problems that the Invention is to solve

However, in the above-mentioned conventional saddle-ride-type vehicle which includes two front wheels, when one front wheel is influenced by a stepped portion of a road or the like, some impact can be absorbed by an independent suspension. However, a remaining impact is transmitted to the handle and the other front wheel from one side tube by way of the cross bar and hence, it is difficult for an occupant to acquire a smooth traveling feeling.

The present invention has been made under such circumstances, and it is an object of the present invention to provide a front two-wheeled saddle-ride-type vehicle which can give a smooth traveling feeling to an occupant while having front wheels on left and right sides thereof.

### Means for solving the problem

This object is achieved by a front two-wheeled straddle-ride-type vehicle having the features of claim 1.

The present invention is directed to a front two-wheeled saddle-ride-type vehicle which includes: a handle (19) which is rotatably supported on a head pipe (13); front wheels (11, 12) which are arranged on left and right sides of the vehicle, respectively; left and right arm members (33, 34) which rotatably support the front wheels (11, 12) on the left and right sides respectively; a link mechanism (72) which includes link members (31, 32) which are rotatably connected to the left and right arm members (33, 34) and connect the left and right arm members (33, 34) to a head pipe (13) side; and steering transmission means (70, 71) which are connected to the handle (19), and rotate the left and right arm members (33, 34) in accordance with the rotation of the handle (19), wherein the link mechanism (72) includes a damper mechanism (80) which suppresses an operation of the link members (31, 32).

Due to such a constitution, the link mechanism includes the damper mechanism so that an operation of the link members which are rotatably connected to the left and right arm members can be suppressed whereby it is possible to prevent the influence from a ground which is exerted on one front wheel from being transmitted to the other front wheel thus allowing the vehicle to give an occupant a smooth traveling feeling.

Further, in the above-mentioned constitution, the link members (31, 32) include an upper link member (31) which connects upper end portions of the left and right arm members (33, 34) and a lower link member (32) which connects the left and right arm members (33, 34) below the upper link member (31), and an intermediate portion (64) of the lower link member (32) is rotatably supported on an intermediate rotary shaft (65) which is arranged in front of the head pipe (13), and the damper mechanism (80) is mounted on the intermediate portion (64) of the lower link member (32).

In this case, the intermediate portion of the lower link member is rotatably supported on the intermediate rotary shaft and the damper mechanism is mounted on the intermediate portion of the lower link member and hence, it is possible to make a dampening force of the damper mechanism act on the left and right arm members uniformly. Further, since the damper mechanism is mounted on the lower link member, it is possible to lower the center of gravity of the vehicle.

Further, the damper mechanism (80) includes a resin damper (81) which is mounted in the rotational direction of the intermediate rotary shaft (65), and a hydraulic damper (91) which includes a cylinder (96) having an axis (96A) approximately parallel to the intermediate rotary shaft (65).

In this case, due to the provision of the resin damper and the hydraulic damper, the occupant can acquire a smooth traveling feeling more efficiently.

Further, the hydraulic dampers (91) may be arranged on left and right sides of the intermediate rotary shaft (65) respectively.

In this case, since the hydraulic dampers are arranged on left and right sides of the intermediate rotary shaft respectively, the hydraulic dampers can be miniaturized, and also can be arranged on left and right sides in a distributed manner so that large-sizing of the periphery of a front side of the vehicle can be suppressed.

Still further, the front two-wheeled saddle-ride-type vehicle may also include rear wheels (21, 22) which are arranged on left and right sides respectively, and a swing mechanism (50) which swingably connects a rear vehicle body (20) which is provided with the rear wheels (21, 22) and a front vehicle body (10) which is provided with the front wheels (11, 12), and a power unit (23) may be supported on the rear vehicle body (20) between the rear wheels (21, 22) which are arranged on left and right sides.

In this case, the rear wheels are arranged on a left and right sides of the vehicle and hence, in addition to the smooth traveling feeling, it is possible to give an occupant a feeling of safety. Further, the power unit is mounted on the rear vehicle body and hence, a drive force can be efficiently transmitted to the rear wheels, and rolling inertia of the front vehicle body becomes smaller thus realizing comfortable traveling.

Further, the upper link member (31) may include an upper right link member (62) which extends toward the right arm member (34) from the head pipe (13) and an upper left link member (61) which extends toward the left arm member (33) from the head pipe (13).

In this case, the upper link member includes the upper right link member and the upper left link member thus providing the laterally split structure and hence, by changing an angle of the upper right link member and an angle of the upper left link member, it is possible to change an inclination angle of the inner wheel and an inclination angle of the outer wheel at the time of turning the vehicle.

### Advantage of the Invention

In the front two-wheeled saddle-ride-type vehicle according to the present invention, the link mechanism includes the damper mechanism so that an operation of the link members which are rotatably connected to the left and right arm members can be suppressed whereby it is possible to prevent the influence from a ground which is exerted on one front wheel from being transmitted to the other front wheel thus allowing the occupant to acquire a smooth traveling feeling.

Further, the damper mechanism is mounted on the intermediate portion of the lower link member and hence, it is possible to make a dampening force of the damper mechanism act on the left and right arm members uniformly. Further, it is possible to lower the center of gravity of the vehicle.

Further, due to the provision of the resin damper and the hydraulic damper, the vehicle can give an occupant a smooth traveling feeling more efficiently.

Further, the hydraulic dampers can be miniaturized, and also can be arranged on left and right sides in a distributed manner so that large-sizing of the periphery of a front side can be suppressed.

Still further, the rear wheels are arranged on a left and right sides of the vehicle and hence, in addition to the smooth traveling feeling, it is possible to give an occupant a feeling of safety. Further, since the power unit is mounted on the rear vehicle body, a drive force can be efficiently transmitted to the rear wheels.

Further, by changing an angle of the upper right link member and an angle of the upper left link member which constitute the two-split structure, it is possible to change an inclination angle of the inner wheel and an inclination angle of the outer wheel at the time of turning the vehicle.

### Brief Description of the Drawings

Fig. 1 is a left side view of a front two-wheeled saddle-ride-type vehicle according to an embodiment of the present invention.
Fig. 2 is a front view of the front two-wheeled saddle-ride-type vehicle as viewed from a front side.
Fig. 3 is a plan view of an upper link member as viewed from above.
Fig. 4 is a cross-sectional view taken along a line IV-IV in Fig. 2.
Fig. 5 is a front view showing a state where the front two-wheeled saddle-ride-type vehicle is inclined leftward of the vehicle.
Fig. 6 is a perspective view showing the constitution around a link mechanism.
Fig. 7 is an enlarged perspective view with a part broken away of a damper mechanism.
Fig. 8 is a cross-sectional view of a side surface of a resin damper.
Fig. 9 is a cross-sectional view of a front surface of the resin damper.
Fig. 10 is a plan view of the resin damper as viewed from a lower link member side.
Fig. 11 is a side view with a part in cross section showing a mounting state of the damper mechanism.
Fig. 12 is a side view with a part broken away of a swing unit and the periphery thereof.
Fig. 13 is a plan view with a part broken away of the swing unit and the periphery thereof as viewed from above.

### Mode for Carrying out the Invention

Hereinafter, a front two-wheeled saddle-ride-type vehicle according to an embodiment of the present invention is explained in conjunction with drawings. Here, in the explanation made hereinafter, the directions of "up and down", "front and rear" and "left and right" correspond to the directions as viewed from an occupant of the vehicle. Further, in the drawings, symbol Fr indicates a front side of the vehicle, symbol Rr indicates a rear side of the vehicle, symbol L indicates a left side of the vehicle, and symbol R indicates a right side of the vehicle.

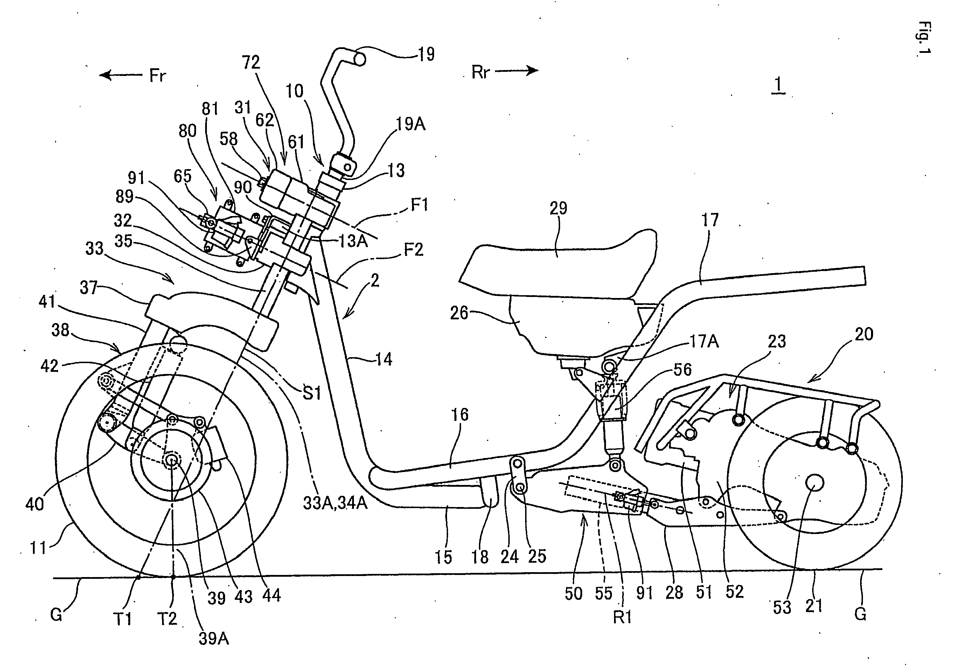

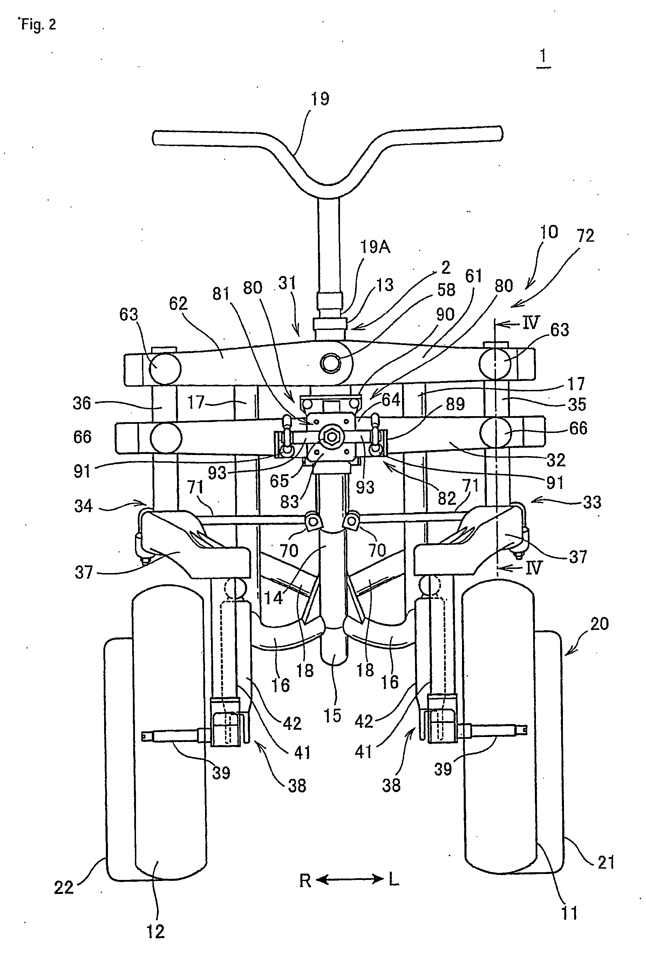

Fig. 1 is a left side view of the front two-wheeled saddle-ride-type vehicle according to the embodiment of the present invention. Fig. 2 is a front view of the front two-wheeled saddle-ride-type vehicle as viewed from a front side.

The front two-wheeled saddle-ride-type vehicle 1 is a saddle-ride-type four-wheeled vehicle which includes front wheels 11, 12 mounted on left and right sides of a front portion of the vehicle respectively, and rear wheels 21, 22 mounted on left and right sides of a rear portion of the vehicle respectively.

The front two-wheeled saddle-ride-type vehicle 1 is constituted by connecting a front vehicle body 10 which includes the front wheels 11, 12 and a vehicle body frame 2 and a rear vehicle body 20 which includes the rear wheels 21, 22 and a power unit 23 for generating a drive force of the vehicle to each other. In Fig. 2, the rear vehicle body 20 is not shown except for the rear wheels 21, 22.

The vehicle body frame 2 includes a head pipe 13 which is mounted on a front end of the vehicle body frame 2, a down frame 14 which extends in the rearward and downward direction from the head pipe 13, a lower center pipe 15 which is contiguously formed with a lower end of the down frame 14 and extends approximately horizontally in the rearward direction, a pair of left and right lower side frames 16 which is branched from a lower end of the down frame 14 toward left and right sides in a bifurcated manner and extends in the rearward direction, and a pair of left and right rear frames 17 which extends toward a rear portion of the vehicle in the rearward and upward direction from rear ends of the lower side frames 16.

Further, between the lower center pipe 15 and the left and right lower side frames 16, a pair of cross pipes 18 which extends in the vehicle widthwise direction is arranged. Further, between the left and right rear frames 17, a cushion support portion 17A which supports an upper end of a rear cushion 56 thereon is arranged.

A handle 19 is inserted into the head pipe 13 by way of a handle shaft 19A and is rotatably mounted on the head pipe 13. Further, in front of the head pipe 13, an upper link member 31 (link member) which is swingable in the lateral direction and a lower link member 32 (link member) which is positioned below the upper link member 31 and is swingable in the lateral direction are arranged. The upper link member 31 and the lower link member 32 are arranged approximately parallel to each other and extend in the vehicle widthwise direction. On left and right ends of the upper link member 31 and the lower link member 32, a left arm member 33 (in left and right arm members) and a right arm member 34 (in left and right arm members) which rotatably support the left and right front wheels 11, 12 are supported respectively. Further, the upper link member 31 and the lower link member 32 are connected to the left arm member 33 and the right arm member 34 in a rotatable manner respectively, and the left arm member 33 and the right arm member 34 are connected to a head pipe 13 side.

The left arm member 33 and the right arm member 34 include a left support pipe 35 and a right support pipe 36 which are supported on the upper link member 31 and the lower link member 32 respectively, bottom bridges 37 which are connected to a lower end of the left support pipe 35 and a lower end of the right support pipe 36 respectively and extend in the frontward direction, and link-type suspension mechanisms 38 which are connected to front ends of the respective bottom bridges 37.

The link-type suspension mechanism 38 includes a support arm 40 which is connected to an axle 39 of the front wheel 11, 12, a fork 41 which connects the support arm 40 to the bottom bridge 37 and a hydraulic damper 42. The fork 41 which extends downward from a front end of the bottom bridge 37 is rotatably connected to a front end of the support arm 40, and a rear end of the support arm 40 is rotatably connected to the axle 39. Further, the cylindrical damper 42 is interposed between the bottom bridge 37 and an intermediate portion of the support arm 40. As described above, the front vehicle body 10 adopts a trailing-arm-type suspension device in which the front wheel 11, 12 is supported on the support arm 40 in such a manner that the front wheel 11, 12 is towed from a front side.

Further, the front wheel 11, 12 includes a brake disc 43 and a brake caliper 44 which applies braking to the brake disc 43.

Further, as shown in Fig. 1, an intersection T1 between a rotation axis 33A, 34A which is an extension of an axis of the left support pipe 35 of the left arm member 33 or the right support pipe 36 of the right arm member 34 and a ground G which is a road surface with which the front wheel 11, 12 comes into contact is positioned in front of an intersection T2 between a perpendicular 39A which is extended downward to the ground G from the axle 39 of the front wheel 11, 12 and the ground G. As described above, the intersection T1 is arranged in front of the intersection T2 in the vehicle longitudinal direction and hence, a force which tends to advance the front wheels 11, 12 straight is generated so that the straight traveling property of the vehicle can be enhanced.

On rear portions of the left and right lower side frames 16, a swing unit 50 (swing mechanism) which supports the rear vehicle body 20 in a swingable manner is mounted. A pair of pivot portions 24 which projects downward is mounted on the rear portions of the left and right lower side frames 16. The swing unit 50 is pivotally supported on a pivot shaft 25 which is inserted into a front end portion of the swing unit 50 and the pivot portion 24 and is swingable in the vertical direction about the pivot shaft 25.

The rear cushion 56 is arranged between the rear portion of the swing unit 50 and the cushion support portion 17A of the rear frame 17. The rear cushion 56 absorbs an impact and the like which the rear vehicle body 20 receives from the ground G.

A fuel tank 26 is arranged above the cushion support portion 17A, and a seat 29 on which an occupant of the vehicle sits is arranged on a fuel tank 26.

The rear vehicle body 20 is constituted such that a power unit 23 is supported on support plates 28 which are arranged below the power unit 23. The power unit 23 is arranged between the rear wheels 21, 22, and includes an engine 51 and a power transmission mechanism 52 which is integrally mounted on a rear portion of the engine 51 and transmits an output of the engine 51 to the rear wheels 21, 22. The rear wheels 21, 22 are supported on axles 53 which are provided to the power transmission mechanism 52, are positioned outside the left and right side surfaces of the power transmission mechanism 52 respectively, and are driven by a drive force of the engine 51.

The support plates 28 are arranged on left and right sides of the power unit 23 in pair, and a rear shaft 55 which extends in the longitudinal direction is fixed between the left and right support plates 28. The rear vehicle body 20 is integrally connected to the front vehicle body 10 due to the connection of the rear shaft 55 with the swing unit 50. Here, the rear shaft 55 and the swing unit 50 are connected to each other in a relatively rotatable manner about an axis R1 of the rear shaft 55. That is, the front vehicle body 10 is laterally swingable about the axis R1 with respect to the rear vehicle body 20 which is in a state where the rear wheels 21, 22 are brought into contact with the ground. The front two-wheeled saddle-ride-type vehicle 1 is a saddle-ride-type four-wheeled swing-type vehicle in which four wheels are provided and the front vehicle body 10 is swingable in the lateral direction.

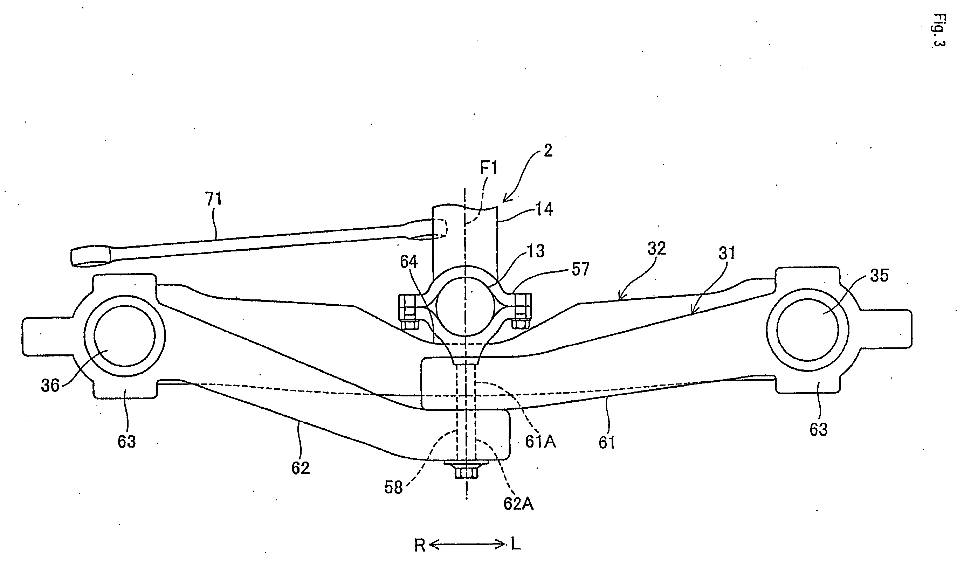

Fig. 3 is a plan view of the upper link member 31 as viewed from above.

A shaft integral bracket 57 which supports the upper link member 31 is fixed to the head pipe 13 by clamping, and the shaft integral bracket 57 includes an upper center joint shaft 58 which projects frontward along the vehicle longitudinal direction in a state where the upper center joint shaft 58 is arranged orthogonal to the head pipe 13. An axis F1 of the upper center joint shaft 58 corresponds to the inclination of the head pipe 13 and is slightly inclined in the frontward and upward direction as viewed in a side view (Fig. 1).

The upper link member 31 has the left-and-right split structure and includes an upper left arm 61 (upper left link member) which extends toward a left support pipe 35 side from the head pipe 13 and an upper right arm 62 (upper right link member) which extends toward a right support pipe 36 side from the head pipe 13.

The upper left arm 61 and the upper right arm 62 are pivotally supported on the upper center joint shaft 58 by inserting the upper center joint shaft 58 into support holes 61A, 62A which are formed in proximal end portions of the upper left arm 61 and the upper right arm 62 respectively, and are rotatable about the upper center joint shaft 58.

Here, the upper left arm 61 is supported on a proximal end side of the upper center joint shaft 58, and the upper right arm 62 is supported on a distal end side of the upper center joint shaft 58. That is, the proximal end portion of the upper left arm 61 and the proximal end portion of the upper right arm 62 are arranged in an overlapping manner while being offset from each other in the longitudinal direction. Further, the upper right arm 62 is more largely curved in the rearward direction than the upper left arm 61 does so that a longitudinal position of the distal end portion of the upper left arm 61 and a longitudinal position of the distal end portion of the upper right arm 62 are substantially aligned with each other.

On respective distal end portions of the upper left arm 61 and the upper right arm 62, pipe support portions 63 which support upper end portions of the left support pipe 35 and the right support pipe 36 respectively in a rotatable manner are formed.

Further, as shown in Fig. 3, the lower link member 32 is arranged below the upper link member 31 such that the lower link member 32 overlaps with the upper link member 31 as viewed in a plan view. As shown in Fig. 2, a longitudinally intermediate portion 64 of the lower link member 32 is rotatably supported on an intermediate rotary shaft 65 which is arranged in front of the head pipe 13. The intermediate rotary shaft 65 is arranged approximately parallel to the upper center joint shaft 58 and extends in the longitudinal direction. An axis F2 of the intermediate rotary shaft 65 is arranged approximately parallel to the axis F1 of the upper center joint shaft 58 as viewed in a side view (Fig. 1).

On pipe support portions 66 which are arranged on both left and right ends of the lower link member 32 respectively, intermediate portions of the left support pipe 35 and the right support pipe 36 are rotatably supported respectively.

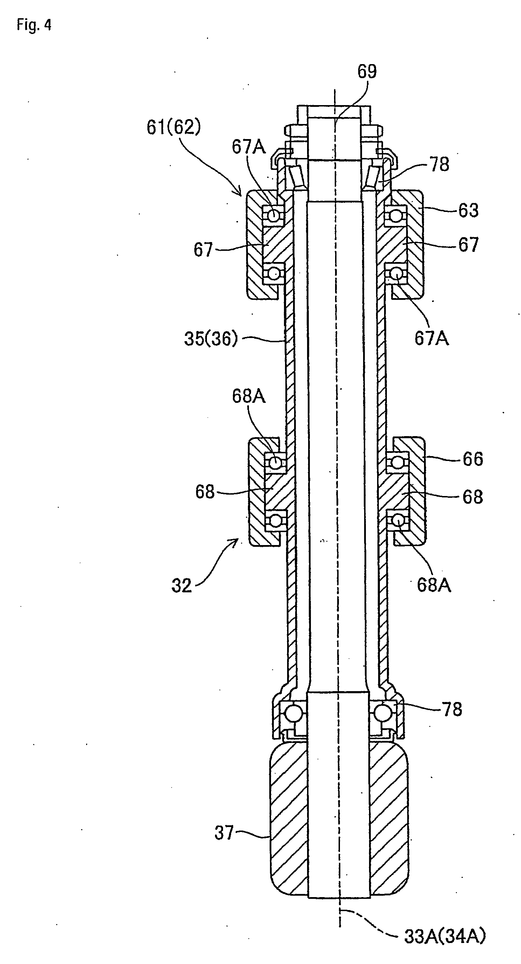

Fig. 4 is a cross-sectional view taken along a line IV-IV in Fig. 2. Although the cross-sectional view taken along the line IV-IV is a cross-sectional view of the left support pipe 35, the right support pipe 36 is constituted in the substantially same manner as the left support pipe 35.

As shown in Fig. 4, on outer peripheral surfaces of the left support pipe 35 and the right support pipe 36, an upper side joint shaft 67 which projects in the vehicle longitudinal direction and a lower side joint shaft 68 which projects in the longitudinal direction below the upper side joint shaft 67 are formed.

The upper side joint shaft 67 is fitted in the pipe support portion 63 of the upper left arm 61 and the pipe support portion 63 of the upper right arm 62 by way of a bearing 67A respectively so that the upper left arm 61 and the upper right arm 62 are rotatable about the corresponding upper side joint shafts 67 respectively.

Further, the lower side joint shaft 68 is fitted in the pipe support portion 66 of the lower link member 32 by way of a bearing 68A so that the lower link member 32 is rotatable about the lower side joint shaft 68.

In the left support pipe 35 and the right support pipe 36, steering shafts 69 which are rotatable in the inside of the left support pipe 35 and the right support pipe 36 are housed respectively. The steering shafts 69 are supported on the left support pipe 35 and the right support pipe 36 respectively by bearings 78 which are formed on upper ends of the left support pipe 35 and the right support pipe 36 and lower ends of the left support pipe 35 and the right support pipe 36 respectively, and the bottom bridges 37 are integrally fixed to lower ends of the steering shafts 69. That is, the bottom bridges 37 are rotatable using the steering shafts 69 as the axes of rotation. Axes of the steering shafts 69 and the rotation axes 33A, 34A of the left arm member 33 and the right arm member 34 agree with each other.

Further, as shown in Fig. 1, the dampers 42 are arranged below the bottom bridges 37 which constitute lower portions of the left arm member 33 and the right arm member 34 respectively. Accordingly, the dampers 42 can be arranged by effectively making use of spaces defined below the left arm member 33 and the right arm member 34 and, at the same time, the dampers 42 can easily ensure a stroke amount.

As shown in Fig. 2, the handle shaft 19A penetrates the head pipe 13 and extends in the downward direction, and tie rod connecting portions 70 which are integrally rotated with the handle shaft 19A are mounted on a lower end of the handle shaft 19A. A pair of left and right tie rods 71 which connects the handle shaft 19A and the left and right bottom bridges 37 to each other is arranged between the tie rod connecting portions 70 and rear portions of the bottom bridges 37 respectively.

When the handle 19 is steered, the bottom bridges 37 are rotated using the steering shafts 69 as axes of rotation by way of the tie rod connecting portions 70. Due to such rotation of the bottom bridges 37, the front wheels 11, 12 are manipulated in the direction that the handle 19 is steered. That is, the tie rods 71 and the tie rod connecting portions 70 constitute a steering transmission means.

In this embodiment, the lower link member 32 is rotatably supported on the intermediate rotary shaft 65, the upper left arm 61 and the upper right arm 62 are rotatably supported on the upper center joint shaft 58, and the left support pipe 35 and the right support pipe 36 are rotatably supported on the upper side joint shaft 67 and the lower side joint shaft 68 respectively thus constituting a link mechanism 72 in the front vehicle body 10.

That is, the link mechanism 72 is an multi-articulated link mechanism in which the head pipe 13, the lower link member 32, the upper left arm 61, the upper right arm 62, the left support pipe 35, and the right support pipe 36 constitute joints (links) respectively, and the intermediate rotary shaft 65, the upper center joint shaft 58, the respective upper side joint shafts 67, and the respective lower side joint shafts 68 constitute turning pairs respectively.

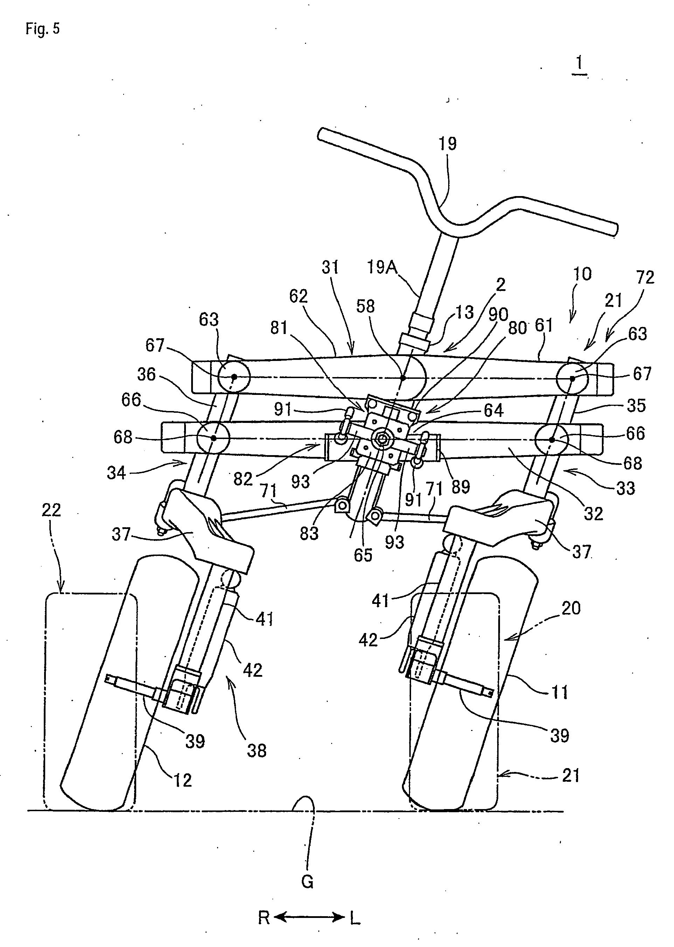

Fig. 5 is a front view showing a state where the front two-wheeled saddle-ride-type vehicle 1 is inclined leftward of the vehicle.

The front two-wheeled saddle-ride-type vehicle 1 is turned in an inclined state in accordance with a steering manipulation of the handle 19, the shift of the center of gravity by an occupant or the like. To be more specific, as shown in Fig. 5, when the front two-wheeled saddle-ride-type vehicle 1 is inclined, the head pipe 13 is inclined about the intermediate rotary shaft 65 and, at the same time, the left arm member 33 and the right arm member 34 are also inclined by way of the link mechanism 72 so that the front wheels 11, 12 are brought into close contact with the ground G in an inclined state. That is, the front wheels 11, 12 are swung by way of the upper link member 31 and the lower link member 32 in response to the swinging of the vehicle body frame 2. In this state, the upper link member 31 and the lower link member 32 are displaced in the inclination direction while maintaining an approximately horizontal posture with respect to the ground G, and the head pipe 13 is inclined at the substantially same angle as the left arm member 33 and the right arm member 34. That is, in a state where the front two-wheeled saddle-ride-type vehicle 1 is inclined, the whole front vehicle body 10 is integrally inclined except for the upper link member 31 and the lower link member 32.

Further, in the front two-wheeled saddle-ride-type vehicle 1, as described above, the front vehicle body 10 is swingable about the axis R1 (Fig. 1) in the lateral direction with respect to the rear vehicle body 20 which is in a state where the rear wheels 21, 22 are brought into contact with the ground. Accordingly, the rear vehicle body 20 maintains an approximately upright posture even in a state where the front vehicle body 10 is inclined so that the rear wheels 21, 22 can travel on the ground G in an approximately upright posture. As described above, the rear wheels 21, 22 can maintain the substantially upright posture even in a state where the front vehicle body 10 is inclined and hence, a firm gripping force of the rear wheels 21, 22 with respect to a ground G can be maintained and, at the same time, a drive force of the engine 51 can be efficiently transmitted to the ground G.

Further, since the rear wheels 21, 22 are arranged on left and right sides of the vehicle body, it is possible to give an occupant a feeling of safety. Further, the power unit 23 which drives the rear wheels 21, 22 is provided to the rear vehicle body 20 and hence, a drive force can be efficiently transmitted to the rear wheels 21,22.

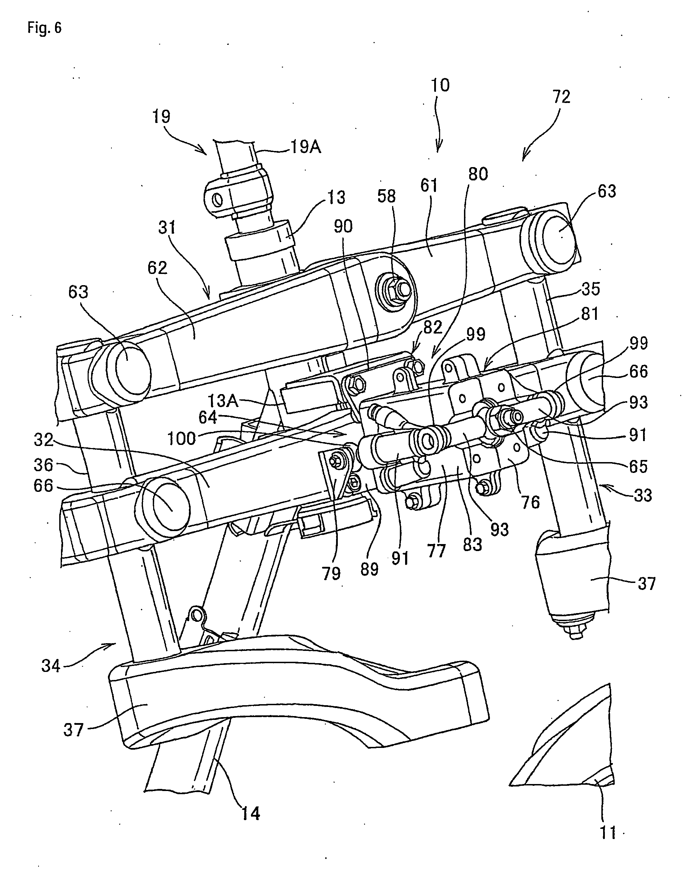

Fig. 6 is a perspective view showing the constitution around the link mechanism 72.

As shown in Fig. 2, Fig. 5 and Fig. 6, a damper mechanism 80 which suppresses the operation of the lower link member 32 is mounted on the intermediate portion 64 of the lower link member 32 of the link mechanism 72.

The damper mechanism 80 is constituted of a resin damper 81 in which resin-made resilient bodies are provided, a pair of left and right hydraulic dampers 91 which is connected to the resin damper 81, a damper bracket 82 which connects the resin damper 81 and the hydraulic dampers 91 to the link mechanism 72, and the intermediate rotary shaft 65.

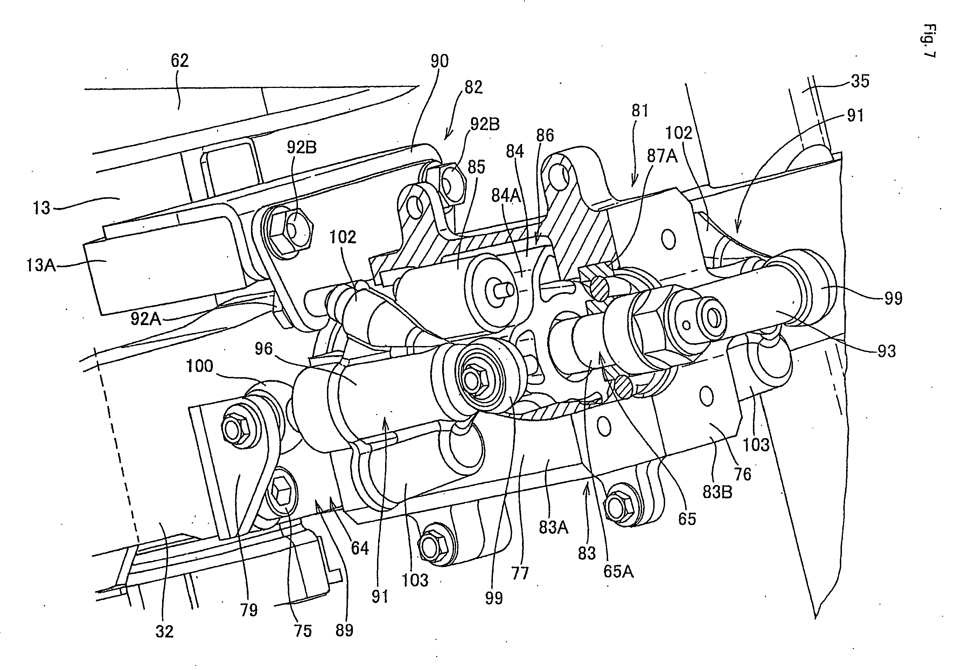

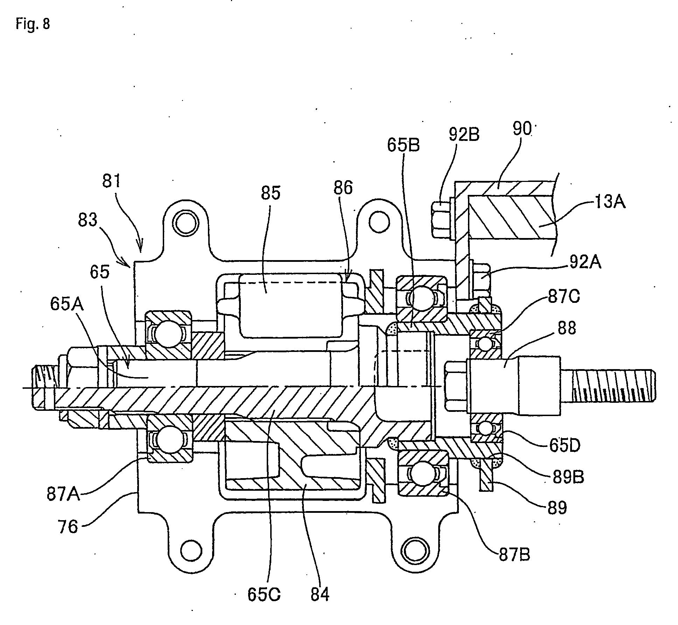

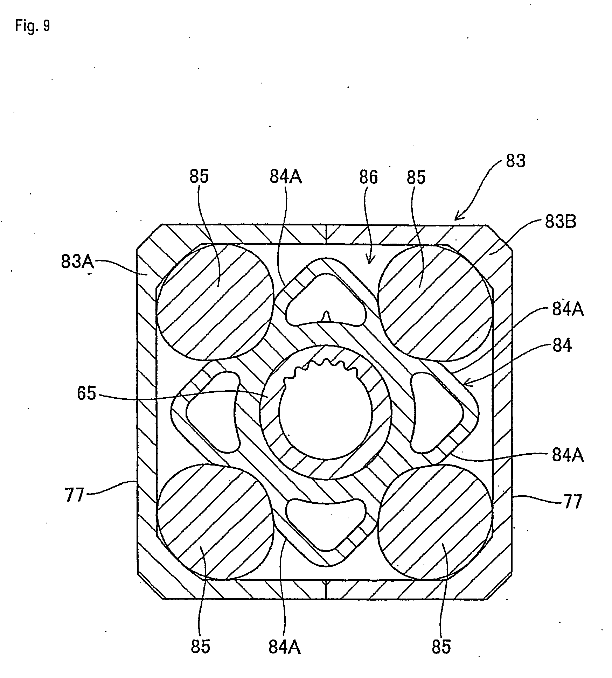

Fig. 7 is an enlarged perspective view with a part broken away of the damper mechanism 80. Fig. 8 is a cross-sectional view of a side surface of the resin damper 81. Fig. 9 is a cross-sectional view of a front surface of the resin damper 81.

As shown in Fig. 6 to Fig. 9, the resin damper 81 has a box-shaped damper case 83, and the intermediate rotary shaft 65, a rotor 84 which is integrally rotated with the intermediate rotary shaft 65, and columnar damper bodies 85 are arranged in the inside of the damper case 83.

The damper case 83 is formed by joining dividing surfaces of cases 83A, 83B which are provided as two-split left and right members and by fastening these cases 83A, 83B to each other using bolts at upper and lower fastening portions. A damper chamber 86 which houses the damper bodies 85 therein is formed in the inside of the damper case 83.

The intermediate rotary shaft 65 is arranged at the center of a rectangular front surface portion 76 of the damper case 83 and penetrates the damper case 83 and the damper chamber 86 in the longitudinal direction such that the intermediate rotary shaft 65 reaches a lower link member 32 side.

As shown in Fig. 9, the rotor 84 is formed into a block shape having an approximately rectangular cross section smaller than an approximately rectangular cross section of the damper chamber 86, and is provided in a rotatable manner about the intermediate rotary shaft 65 in the damper chamber 86. Between four corners in the damper chamber 86 and respective side surfaces 84A of the rotor 84, spaces in which damper bodies 85 can be housed respectively are defined. The damper bodies 85 are provided at four positions in a state where the damper bodies 85 are sandwiched between the respective inner walls of four corners of the damper chamber 86 and the respective side surfaces 84A of the rotor 84. Here, the damper bodies 85 are made of rubber and are deformed by being sandwiched between the rotor 84 and the four corners in the damper chamber 86 when the rotor 84 is rotated.

The resin damper 81 is mounted in the rotational direction of the intermediate rotary shaft 65, and functions as a damper due to the resistance against deformation which is generated when the damper body 85 is deformed by the rotor 84.

As shown in Fig. 8, the intermediate rotary shaft 65 penetrates the damper case 83 in the longitudinal direction, and includes a front end portion 65A which is rotatably and pivotally supported on a bearing 87A mounted on a front portion of the damper case 83, a rear end portion 65B which is rotatably and pivotally supported on a bearing 87B mounted on a rear portion of the damper case 83, and an intermediate portion 65C to which the rotor 84 is fixed. The inside of the rear end portion 65B is made hollow, and an outer race of a bearing 87C which is coaxially arranged with the intermediate rotary shaft 65 is fixed to an inner diameter portion 65D of the rear end portion 65B. To the inner race of the bearing 87C, a support shaft 88 which extends toward a lower link member 32 side is fixed, and the support shaft 88 is rotatably mounted on an inner side of the rear end portion 65B of the intermediate rotary shaft 65 by way of the bearing 87C.

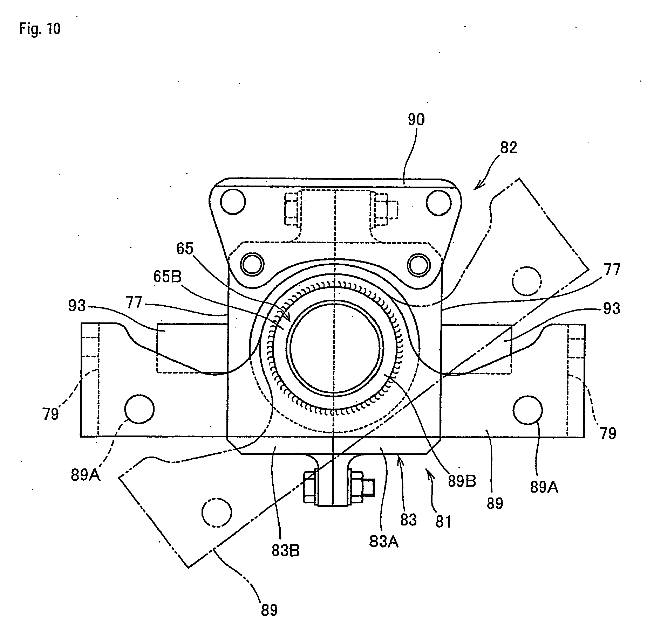

Fig. 10 is a plan view of the resin damper 81 as viewed from a lower link member 32 side.

As shown in Fig. 7 and Fig. 10, the damper bracket 82 includes a link-side bracket 89 which connects the resin damper 81 to the lower link member 32, and a frame-side bracket 90 which connects the resin damper 81 to the head pipe 13.

As shown in Fig. 8 and Fig. 10, the link-side bracket 89 is formed into a plate shape which extends in the vehicle widthwise direction, and is fixed to the rear end portion 65B of the intermediate rotary shaft 65 which projects from a rear portion of the resin damper 81. A fixing hole 89A for fastening the link-side bracket 89 to the front surface of the lower link member 32 is formed in both longitudinal ends of the link-side bracket 89, and the link-side bracket 89 is fixed to the lower link member 32 by way of bolts 75 (see Fig. 7) which are inserted into the fixing holes 89A.

In a longitudinally intermediate portion of the link-side bracket 89, a shaft fixing hole 89B which is fixed to the rear end portion 65B is formed. To be more specific, the link-side bracket 89 is integrally fixed to the intermediate rotary shaft 65 by connecting an outer peripheral portion of the rear end portion 65B which is engaged with the shaft fixing hole 89B to the shaft fixing hole 89B by welding. That is, the link-side bracket 89 is, as indicated by a double-dashed chained line in Fig. 10, integrally rotatable with the intermediate rotary shaft 65, and in a state where the link-side bracket 89 is fixed to the lower link member 32 together with the resin damper 81, the damper case 83 is rotatable about the intermediate rotary shaft 65 relative to the lower link member 32.

As shown in Fig. 7, Fig. 8, and Fig. 10, the frame-side bracket 90 is formed into a plate shape, and is fastened to a rear surface of the damper case 83 using a plurality of bolts 92A which penetrate a lower portion of the frame-side bracket 90. Further, a block-shaped stay portion 13A which extends in the frontward direction is mounted on a front surface of the head pipe 13. The frame-side bracket 90 is fastened to a front end of the stay portion 13A using a plurality of bolts 92B which penetrate an upper portion of the frame-side bracket 90. That is, the damper case 83 is connected to the head pipe 13 by way of the frame-side bracket 90 and the stay portion 13A, and as shown in Fig. 5, when the head pipe 13 is inclined, the damper case 83 is rotated about the intermediate rotary shaft 65 integrally with the head pipe 13.

Further, the intermediate rotary shaft 65 is supported in front of the lower link member 32 by way of the frame-side bracket 90 and the damper case 83, and the lower link member 32 is rotatably supported on the intermediate rotary shaft 65 by way of the link-side bracket 89. That is, the intermediate rotary shaft 65 which supports the rotor 84 of the resin damper 81 is also used as a support shaft for supporting the lower link member 32 and hence, it is unnecessary to provide a dedicated shaft for rotatably supporting the lower link member 32. Accordingly, the structure of the link mechanism 72 can be made simple.

As shown in Fig. 6, Fig. 7 and Fig. 10, on the front surface portion 76 of the damper case 83, hydraulic damper connecting rods 93 which extend leftward and rightward respectively in the vehicle widthwise direction are respectively mounted. The hydraulic damper connecting rods 93 respectively extend leftward and rightward from the center of the front surface portion 76 continuously with the intermediate rotary shaft 65 and substantially perpendicular to respective side surfaces 77 on left and right sides of the damper case 83 and project toward the outside of the respective side surfaces 77. The hydraulic damper connecting rods 93 are integrally mounted on the damper case 83 and hence, when the damper case 83 is rotated, the hydraulic damper connecting rods 93 are rotated integrally with the damper case 83 about the intermediate rotary shaft 65.

Further, on both longitudinal end portions of the link-side bracket 89, a hydraulic damper stay 79 which projects in the frontward direction is formed respectively. The hydraulic damper stays 79 are positioned outside the hydraulic damper connecting rods 93 respectively.

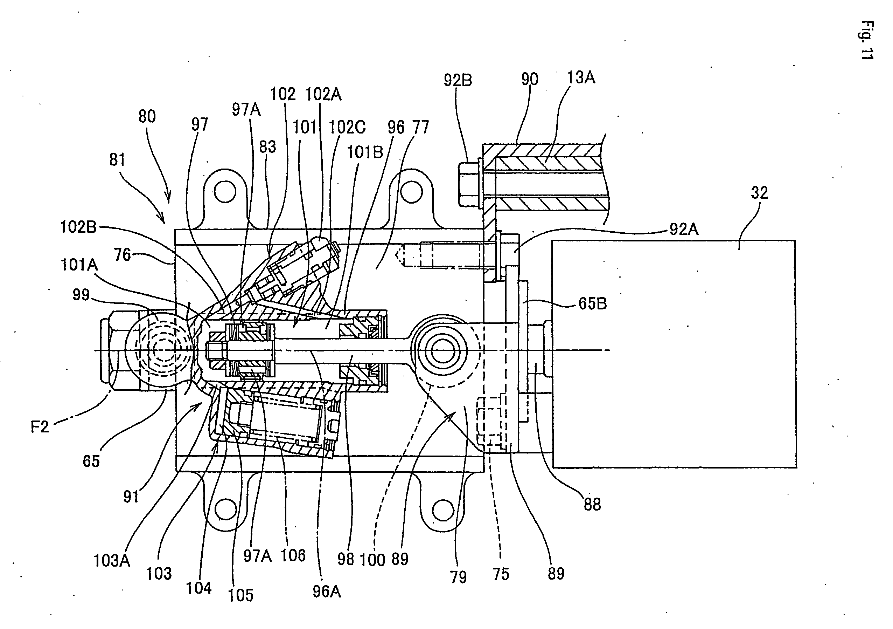

Fig. 11 is a side view with a part in cross section showing a mounting state of the damper mechanism 80.

To explain the damper mechanism 80 also in conjunction with Fig. 11, the hydraulic damper 91 is formed into a cylindrical shape which extends in the longitudinal direction, and includes a cylinder portion 96 (cylinder) having a cylindrical shape, a piston 97 which is slidably disposed in the inside of the cylinder portion 96, and a piston rod 98 which is connected to the piston 97.

On a front end of the cylinder portion 96, a universal joint portion 99 which is constituted of a ball joint is mounted. Further, the piston rod 98 extends from a bottom surface of the piston 97 toward the outside of the cylinder portion 96 on a side opposite to the universal joint portion 99, and a universal joint portion 100 which is constituted of a ball joint is mounted on a distal end of the piston rod 98.

A fluid chamber 101 which houses the piston 97 and the piston rod 98 therein is formed in the inside of the cylinder portion 96. The inside of the fluid chamber 101 is filled with oil which is used as a fluid for attenuating the movement of the piston 97. The inside of the fluid chamber 101 is partitioned into a first fluid chamber 101A on a universal joint portion 99 side and a second fluid chamber 101 B on a universal joint portion 100 side.

An oil passage 97A which allows oil to pass therethrough in the axial direction of the piston 97 is formed in the piston 97. In the hydraulic damper 91, the movement of the piston 97 is suppressed due to the resistance of oil which is generated in the oil flow passage 97A along with the movement of the piston 97 in the inside of the fluid chamber 101 and hence, the hydraulic damper 91 functions as a damper. That is, when the piston 97 is towed by the piston rod 98 and the hydraulic damper 91 is elongated, a damper action is generated by oil which flows into the first fluid chamber 101 A from a second fluid chamber 101 B side through the oil flow passage 97A. On the other hand, when the piston 97 is pushed by the piston rod 98 so that the hydraulic damper 91 is retracted, a damper action is generated by oil which flows into the second fluid chamber 101 B from a first fluid chamber 101A side through the oil flow passage 97A.

An adjustment mechanism part 102 which adjusts a magnitude of a damper action of the hydraulic damper 91 is integrally mounted on a side portion of the cylinder portion 96. The adjustment mechanism part 102 includes an adjustment mechanism 102A which changes the resistance to oil, and the adjustment mechanism 102A is connected to the first fluid chamber 1 01A and the second fluid chamber 101 B through flow passages 102B, 102C. The adjustment mechanism part 102 is mounted on an upper side surface of the cylinder portion 96.

Further, an absorption mechanism part 103 which absorbs the fluctuation of pressure of oil is integrally mounted on a side portion of the cylinder portion 96. The absorption mechanism part 103 includes an absorption chamber 104 which is communicated with the first fluid chamber 101A through a flow passage 103A, an absorption piston 105 which is slidably disposed in the inside of the absorption chamber 104, and a spring 106 which biases the absorption piston 105 against the pressure of oil. The absorption mechanism part 103 absorbs the fluctuation of pressure in the fluid chamber 101 generated due to the movement of the piston rod 98 by means of the absorption piston 105 which changes a volume of the absorption chamber 104 by moving corresponding to the pressure of oil. The absorption mechanism part 103 is mounted on a lower side surface of the cylinder portion 96.

As shown in Fig. 7 and Fig. 11, the respective left and right hydraulic dampers 91 are connected to the link mechanism 72 in such a manner that the universal joint portion 100 of the piston rod 98 is connected to the hydraulic damper stay 79 of the lower link member 32, and the universal joint portion 99 of the cylinder portion 96 is connected to the distal end of the hydraulic damper connecting rod 93. That is, the connection of the hydraulic damper 91 is made by way of the universal joint portions 99, 100 which are ball joints and hence, the hydraulic damper 91 is rotatable about the universal joint portions 99, 100.

The left and right hydraulic dampers 91 are arranged on and along respective side surfaces 77 of the damper case 83 such that the left and right hydraulic dampers 91 are positioned on left and right sides of the intermediate rotary shaft 65. By arranging the hydraulic dampers 91 on left and right sides in a distributed manner as described above, it is possible to suppress the large-sizing of the damper mechanism 80.

Further, the hydraulic damper 91, as viewed in a side view, overlaps with the intermediate rotary shaft 65 and is arranged approximately parallel to the intermediate rotary shaft 65 such that an axis 96A of the cylinder portion 96 approximately agrees with the axis F2 of the intermediate rotary shaft 65 and is approximately parallel to the axis F2. Due to such a constitution, it is possible to arrange the hydraulic dampers 91 with requisite minimum spaces so that large-sizing of the damper mechanism 80 can be suppressed.

Further, the lower link member 32 is rotatably supported on the intermediate rotary shaft 65 mounted on the intermediate portion 64, and the damper mechanism 80 is mounted on the intermediate portion 64 and hence, it is possible to make a dampening force of the damper mechanism 80 act on the left arm member 33 and the right arm member 34 uniformly. Further, since the damper mechanism 80 is mounted on the lower link member 32, it is possible to lower the center of gravity of the vehicle.

Further, as shown in Fig. 8 and Fig. 11, the support shaft 88 which extends from the rear end portion 65B of the intermediate rotary shaft 65 is fastened to a front surface of the lower link member 32. In this manner, the intermediate rotary shaft 65 is connected to the lower link member 32 also by the support shaft 88 in addition to the link-side bracket 89 and hence, the intermediate rotary shaft 65 can be stably supported by the lower link member 32 in a stable manner.

Next, the manner of operation of the damper mechanism 80 is explained.

As shown in Fig. 5, to take a case where the front vehicle body 10 is inclined toward a left side of the vehicle as one example, the inclination operation of the front vehicle body 10 is suppressed by the damper mechanism 80 so that the rapid inclination is prevented. Here, the inclination operation means the swinging of the front vehicle body 10 in the left and right directions of the vehicle using the intermediate rotary shaft 65 and the rear shaft 55 as axes of swinging.

When the front vehicle body 10 is inclined toward a left side of the vehicle, in the resin damper 81, the damper case 83 which is connected to the head pipe 13 by way of the frame-side bracket 90 is integrally rotated with the head pipe 13 toward a left side so that the damper case 83 is rotated relative to the rotor 84 mounted on the intermediate rotary shaft 65 which is integrally formed with the lower link member 32 held is an approximately horizontal state. That is, due to the rotation of the damper case 83 toward a left side of the vehicle with respect to the rotor 84, the damper bodies 85 are deformed by compression between the damper case 83 and the rotor 84 and the inclination operation of the front vehicle body 10 is suppressed due to this resistance against deformation.

When the front vehicle body 10 is inclined toward a left side of the vehicle so that the damper case 83 is rotated toward a left side of the vehicle, the hydraulic damper connecting rod 93 is rotated toward a left side of the vehicle integrally with the damper case 83. Due to the rotation of the hydraulic damper connecting rod 93, the universal shaft joint portion 99 is towed and extended downward in the hydraulic damper 91 on a left side of the vehicle, while the universal shaft joint portion 99 is towed and extended upward in the hydraulic damper 91 on a right side of the vehicle.

To be more specific, as shown in Fig. 11, when each hydraulic damper 91 is extended, the cylinder portion 96 is moved so as to decrease a volume of the second fluid chamber 101B so that oil flows into the first fluid chamber 101A from the second fluid chamber 101B through the oil flow passage 97A. Here, due to the resistance on the flow of oil, the inclination operation of the front vehicle body 10 is suppressed. On the other hand, in returning the front vehicle body 10 to an original upright state from the inclined state, the hydraulic damper 91 is retracted, and due to the resistance on the flow of oil which flows into the second fluid chamber 101B from the first fluid chamber 101A through the oil flow passage 97A, the inclination operation of the front vehicle body 10 is suppressed. That is, the hydraulic damper 91 can attenuate the inclination operation of the front vehicle body 10 in both the case where the front vehicle body 10 is inclined and the case where the front vehicle body 10 is returned to the upright state from the inclined state.

In this embodiment, the link mechanism 72 is provided with the resin damper 81 and the pair of hydraulic dampers 91 so that the operation of the upper link member 31 and the lower link member 32 which are connected to the left arm member 33 and the right arm member 34 can be suppressed by the damper mechanism 80. Accordingly, it is possible to prevent the influence exerted on one of the front wheels 11, 12 from the ground G from being transmitted to the other of the front wheels 11, 12 by way of the left arm member 33, the right arm member 34 and the link mechanism 72 so that it is possible to provide a vehicle which can give a smooth traveling feeling to an occupant.

Further, in a vehicle having front wheels on left and right sides thereof such as the front wheels 11, 12, there arises a phenomenon where due to the difference in turning radius between an inner wheel and an outer wheel, a state where a vertical load applied to the front wheel is equal between the left and right front wheels is not always maintained, and a load from the ground G is transmitted to the front wheel to which a large vertical load is applied to the front wheel to which a small vertical load is applied by way of the link mechanism 72 or the like so that the load is alternately shifted between the left and right front wheels during turning. According to this embodiment, the operation of the link mechanism 72 is suppressed by the resin damper 81 and the hydraulic dampers 91 and hence, the alternating shift of the vertical load between the front wheel 11 and the front wheel 12 can be suppressed whereby a feeling which an occupant acquires when the vehicle turns can be enhanced thus giving the occupant a feeling of safety.

Further, as shown in Fig. 2 and Fig. 5, the upper link member 31 is divided into the upper left arm 61 and the upper right arm 62 and hence, it is possible to easily change the geometry of the link mechanism 72 by changing a length and a mounting angle of the upper left arm 61 and the upper right arm 62. Accordingly, it is possible to change inclination angles of the inner wheel and the outer wheel with respect to the front wheels 11, 12 at the time of turning the vehicle.

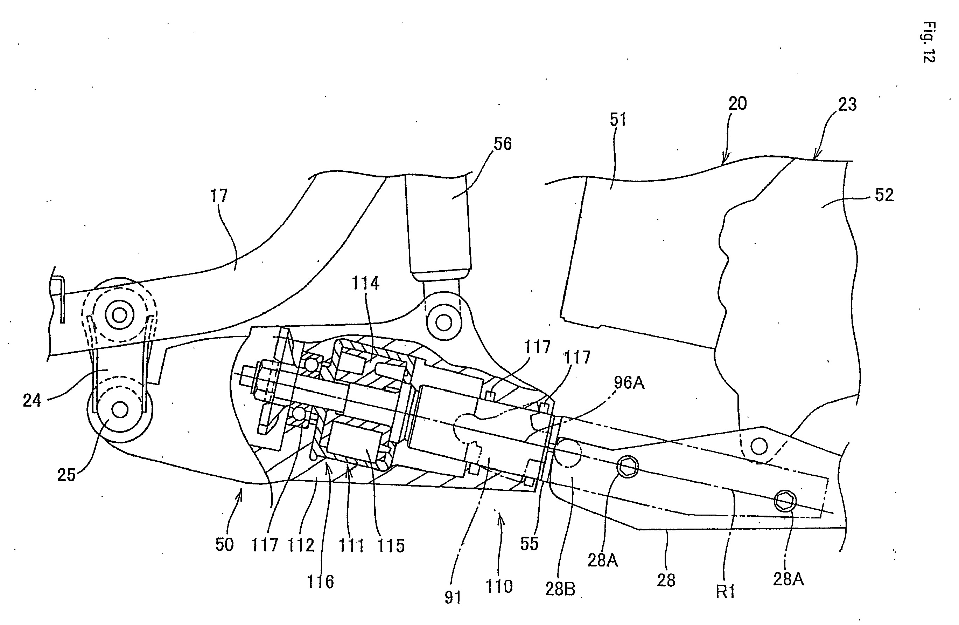

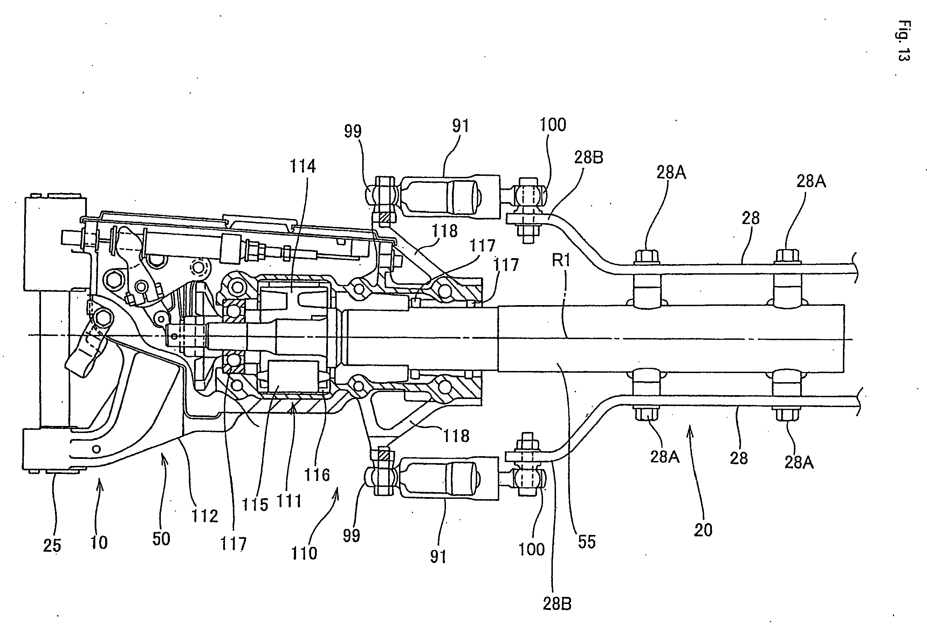

Fig. 12 is a side view with a part broken away of the swing unit 50 and the periphery of the swing unit 50. Fig. 13 is a plan view with a part broken away of the swing unit 50 and the periphery of the swing unit 50 as viewed from above.

As shown in Fig. 12 and Fig. 13, the pair of left and right support plates 28 which supports the power unit 23 is arranged such that the support plates 28 sandwich the rear shaft 55 therebetween from left and right sides of the rear shaft 55, and are fastened to the rear shaft 55 by a plurality of bolts 28A which penetrate the support plate 28. That is, the rear shaft 55 is a shaft which is integrally connected to the power unit 23, and is not rotated even when the front vehicle body 10 is inclined.

The swing unit 50 includes a rear damper mechanism 110 having the constitution substantially equal to the constitution of the damper mechanism 80 so that the swinging of the vehicle body frame 2 of the front vehicle body 10 relative to the rear vehicle body 20 is suppressed by the rear damper mechanism 110.

The rear damper mechanism 110 includes a rear resin damper 111 which is connected to the rear shaft 55, and a pair of left and right hydraulic dampers 91 which extends between the swing unit 50 and the rear vehicle body 20. The hydraulic damper 91 provided to the rear damper mechanism 110 is a part equal to the hydraulic damper 91 of the front vehicle body. In Fig. 12, only a profile of the hydraulic dampers 91 is indicated by a double-dashed chained line.

The swing unit 50 includes a unit case 112 which is pivotally supported on the pivot shaft 25, and the rear shaft 55 and the rear resin damper 111 are housed in the unit case 112.

The rear shaft 55 is provided with a rotor 114 which is integrally mounted on the rear shaft 55, and a damper chamber 116 which houses the rotor 114 therein is formed in the inside of the unit case 112. The damper chamber 116 is integrally formed with the unit case 112, and is integrally rotated with the unit case 112. A plurality of columnar damper bodies 115 made of a rubber are disposed between the rotor 114 and an inner wall of the damper chamber 116. The rear resin damper 111 functions as a damper by making use of the resistance against deformation of the damper bodies 115 which are deformed by compression by being sandwiched between the inner wall portion of the damper chamber 116 and the rotor 114 along with the rotation of the damper chamber 116.

In the inside of the unit case 112, a plurality of bearings 117 are arranged in a sandwiched manner in front of and behind the damper chamber 116, and the rear shaft 55 is pivotally supported on the bearings 117. That is, the unit case 112 is rotatable relative to the rear shaft 55 by way of the bearings 117.

Damper stays 118 which project toward left and right sides in the vehicle width direction are respectively formed on a rear portion of the unit case 112. Further, damper connection portions 28B which are bent so as to have a width therebetween which is approximately equal to a width between the left and right damper stays 118 are formed on front ends of the support plates 28.

The hydraulic dampers 91 of the rear damper mechanism 110 are provided between the swing unit 50 and the rear vehicle body 20 in a state where universal joint portions 99 are connected to the damper stays 118 and universal joint portions 100 are connected to the damper connection portions 28B. Further, the hydraulic damper 91 of the rear damper mechanism 110, as viewed in a side view, overlaps with the rear shaft 55 and is arranged approximately parallel to the rear shaft 55 such that the axis 96A of the cylinder portion 96 approximately agrees with the axis R1 of the rear shaft 55 and is approximately parallel to the axis R1. Due to such a constitution, it is possible to arrange the hydraulic dampers 91 with requisite minimum spaces so that large-sizing of the rear damper mechanism 110 can be suppressed.

When the unit case 112 is rotated along with the inclining of the front vehicle body 10, the inclination operation of the front vehicle body 10 is suppressed due to the resistance against deformation of the damper bodies 115 which are deformed between the damper chamber 116 and the rotor 114. Further, when the unit case 112 is rotated, the left and right damper stays 118 are integrally rotated with the unit case 112 about the rear shaft 55, the hydraulic dampers 91 are extended by way of the damper stays 118 so that the hydraulic dampers 91 generate a damper action which suppresses the inclination operation of the front vehicle body 10. Further, the hydraulic dampers 91 generate a damper action also when the front vehicle body 10 is swung in the direction so as to return the front vehicle body 10 to an upright state from an inclined state.

In this manner, by providing the rear resin damper 111 and the hydraulic dampers 91 between the front vehicle body 10 and the rear vehicle body 20, it is possible to dampen the inclination operation of the front vehicle body 10 so that the inclination operation of the front vehicle body 10 becomes smooth.

Further, in this embodiment, in addition to mounting of the damper mechanism 80 on the front vehicle body 10, the rear damper mechanism 110 is also mounted on the rear vehicle body 20 side. Accordingly, it is possible to suppress the inclination operation of the front vehicle body 10 in a balanced manner between a front side and a rear side of the vehicle so that the inclination operation of the front vehicle body 10 becomes smooth.

Further, in the front two-wheeled saddle-ride-type vehicle 1, the upper link member 31 and the lower link member 32 are rotatably supported on a front side of the head pipe 13, and the vehicle body frame 2 is also supported in a swingable manner relative to the rear vehicle body 20 by way of the rear shaft 55 so that the front wheels 11, 12 and the vehicle body frame 2 are swingable. Accordingly, turning radius at the time of turning the vehicle can be made small thus enhancing mobility of the vehicle. Further, the rear wheels 21, 22 do not swing and hence, it is possible to efficiently transmit a drive force to be transmitted to the ground G from the power unit 23 by way of the rear wheels 21, 22.

Further, as shown in Fig. 1, the axis F1 of the upper center joint shaft 58 and the axis F2 of the intermediate rotary shaft 65 are, as viewed in a side view, arranged approximately parallel to and offset upward from the axis R1 of the rear shaft 55 which constitutes a swing axis of the vehicle body frame 2. In this manner, the axis F1 which constitutes the rotation axis of the upper link member 31 and the axis F2 which constitutes the rotation axis of the lower link member 32 are arranged approximately parallel to the axis R1, and swing angles of the front wheels 11, 12 and a swing angle of the vehicle body frame 2 can be set substantially equal and hence, an occupant can acquire a favorable traveling feeling at the time of turning the vehicle.

As has been explained heretofore, according to the embodiment to which the present invention is applied, the resin damper 81 and the hydraulic dampers 91 are mounted on the link mechanism 72 of the front vehicle body 10 so that operations of the upper link member 31 and the lower link member 32 which are rotatably connected to the left arm member 33 and the right arm member 34 can be suppressed. Accordingly, it is possible to prevent the influence from the ground G which is exerted on one of the front wheels 11, 12 from being transmitted to the other of the front wheels 11, 12 and hence, it is possible to provide a vehicle which can give a smooth traveling feeling to an occupant.

Further, the intermediate portion 64 of the lower link member 32 is rotatably supported on the intermediate rotary shaft 65 and the damper mechanism 80 is mounted on the intermediate portion 64 and hence, it is possible to make a dampening force of the damper mechanism 80 act on the left arm member 33 and the right arm member 34 uniformly. Further, since the damper mechanism 80 is mounted on the lower link member 32, it is possible to lower the center of gravity of the vehicle.

Further, the damper mechanism 80 includes the resin damper 81 and the hydraulic dampers 91 and hence, the inclination operation of the front vehicle body 10 can be suppressed more efficiently so that the vehicle can acquire a smooth traveling feeling.

Further, since the hydraulic dampers 91 are arranged on left and right sides of the intermediate rotary shaft 65 respectively, the hydraulic dampers 91 can be miniaturized, and also can be arranged on left and right sides in a distributed manner so that large-sizing of the damper mechanism 80 can be suppressed.

Still further, the rear wheels 21, 22 are arranged on left and right sides of the vehicle and hence, in addition to the smooth traveling feeling, it is possible to give an occupant a feeling of safety. Further, the power unit 23 is mounted on the rear vehicle body 20 and hence, a transmission loss of the drive force can be reduced, the drive force of the power unit 23 can be efficiently transmitted to the rear wheels 21, 22, and rolling inertia of the front vehicle body 10 becomes smaller thus realizing comfortable traveling.

Further, the upper link member 31 includes the upper left arm 61 and the upper right arm 62 thus providing the laterally split structure and hence, by changing an angle of the upper left arm 61 and an angle of the upper right arm 62, it is possible to change an inclination angle of the inner wheel and an inclination angle of the outer wheel of the front wheels 11, 12 at the time of turning the vehicle.

Further, the above-mentioned embodiment merely shows one mode to which the present invention is applied, and the present invention is not limited to the above-mentioned embodiment.

In the above-mentioned embodiment, although the explanation is made assuming that the damper mechanism 80 is mounted on the lower link member 32, the present invention is not limited to such a constitution, and the damper mechanism 80 may be mounted on the upper link member 31. Further, it is needless to say that the detailed constitution of the front two-wheeled saddle-ride-type vehicle 1 can be arbitrarily changed.

The present invention is directed to providing a front two-wheeled saddle-ride-type vehicle which is provided with front wheels on left and right sides, and can acquire a smooth traveling feeling.

In the front two-wheeled saddle-ride-type vehicle including: a handle 19 which is rotatably supported on a head pipe 13; front wheels 11, 12 which are arranged on left and right sides respectively; a left arm member 33 and a right arm member 34 which rotatably support the front wheels 11, 12 on the left and right sides respectively; a link mechanism 72 which includes an upper link member 31 and a lower link member 32 which are rotatably connected to the left arm member 33 and the right arm member 34; and steering transmission means which are connected to the handle 19, and rotate the left arm member 33 and the right arm member 34 in accordance with the rotation of the handle 19, the link mechanism 72 includes a damper mechanism 80 which suppresses an operation of the upper link member 31 and the lower link member 32.

## Claims

1. A front two-wheeled saddle-ride-type vehicle comprising:
a handle (19) which is rotatably supported on a head pipe (13);
front wheels (11, 12) which are arranged on left and right sides of the vehicle respectively;
left and right arm members (33, 34) which rotatably support the front wheels (11, 12) on the left and right sides respectively;
a link mechanism (72) which includes link members (31, 32) which are rotatably connected to the left and right arm members (33, 34) and connect the left and right arm members (33, 34) to a head pipe (13) side; and
steering transmission means (70, 71) which are connected to the handle (19), and rotate the left and right arm members (33, 34) in accordance with the rotation of the handle (19), wherein
the link mechanism (72) includes a damper mechanism (80) which suppresses an operation of the link members (31, 32),
the link members (31, 32) include an upper link member (31) which connects upper end portions of the left and right arm members (33, 34) and a lower link member (32) which is positioned below the upper link member (31) and connects the left and right arm members (33, 34), and
an intermediate portion (64) of the lower link member (32) is rotatably supported on an intermediate rotary shaft (65) which is arranged in front of the head pipe (13),
**characterized in that**
the damper mechanism (80) is mounted on the intermediate portion (64) of the lower link member (32) and comprises a resin damper (81) which is mounted in the rotational direction of the intermediate rotary shaft (65), a hydraulic damper (91) which includes a cylinder (96) having an axis (96A) approximately parallel to the intermediate rotary shaft (65), and a damper bracket (82) which includes a link-side bracket (89) which connects link-side portions of the resin damper (81) and the hydraulic damper (91) to the lower link member (32), and a frame-side bracket (90) which connects frame-side portions of the resin damper (81) and the hydraulic damper (91) to the head pipe (13).

2. The front two-wheeled saddle-ride-type vehicle according to claim 1, wherein the hydraulic dampers (91) are arranged on left and right sides of the intermediate rotary shaft (65) respectively.

3. The front two-wheeled saddle-ride-type vehicle according to claim 2, further comprising rear wheels (21, 22) which are arranged on left and right sides respectively, and a swing mechanism (50) which swingably connects a rear vehicle body (20) which is provided with the rear wheels (21, 22) and a front vehicle body (10) which is provided with the front wheels (11, 12), wherein a power unit (23) is supported on the rear vehicle body (20) between the rear wheels (21, 22) which are arranged on left and right sides.

4. The front two-wheeled saddle-ride-type vehicle according to claim 3, wherein the upper link member (31) includes an upper right link member (62) which extends toward the right arm member (34) from the head pipe (13) and an upper left link member (61) which extends toward the left arm member (33) from the head pipe (13).

5. The front two-wheeled saddle-ride-type vehicle according to claim 1, wherein the intermediate rotary shaft (65) is supported by way of the frame-side bracket (90) and a damper case (83) of the resin damper (81), and the lower link member (32) is rotatably supported on the intermediate rotary shaft (65) by way of the link-side bracket (89).

## Patentansprüche

1. Fahrzeug vom Sattelfahrtyp mit zwei Vorderrädern, umfassend:
einen Griff (19), welcher an einem Kopfrohr (13) drehbar gelagert ist; Vorderräder (11, 12), welche jeweils auf der linken und der rechten Seite des Fahrzeugs angeordnet sind;
linke und rechte Armelemente (33, 34), welche die Vorderräder (11, 12) jeweils auf der linken und der rechten Seite drehbar lagern;
einen Verbindungsmechanismus (72), welcher Verbindungselemente (31, 32) umfasst, welche mit den linken und rechten Armelementen (33, 34) drehbar verbunden sind und die linken und rechten Armelemente (33, 34) mit der Seite eines Kopfrohrs (13) verbinden; und
Lenkungsübertragungsmittel (70, 71), welche mit dem Griff (19) verbunden sind und die linken und rechten Armelemente (33, 34) gemäß der Drehung des Griffs (19) drehen,
wobei der Verbindungsmechanismus (72) einen Dämpfermechanismus (80) umfasst, welcher eine Betätigung der Verbindungselemente (31, 32) unterdrückt,
die Verbindungselemente (31, 32) ein oberes Verbindungselement (31), welches obere Endabschnitte von den linken und rechten Armelementen (33, 34) verbindet, und ein unteres Verbindungselement (32), welches unterhalb des oberen Verbindungselements (31) angeordnet ist und die linken und rechten Armelemente (33, 34) verbindet, umfassen, und
ein Zwischenabschnitt (64) von dem unteren Verbindungselement (32) drehbar an einer Zwischendrehwelle (65) gelagert ist, welche vor dem Kopfrohr (13) angeordnet ist,
**dadurch gekennzeichnet, dass**
der Dämpfermechanismus (80) an dem Zwischenabschnitt (64) von dem unteren Verbindungselement (32) angebracht ist und einen Harz/Kunstharzdämpfer (81) umfasst, welcher in der Drehrichtung von der Zwischendrehwelle (65) angebracht ist, einen Hydraulikdämpfer (91) umfasst, welcher einen Zylinder (96) umfasst, welcher eine Achse (96A) annähernd parallel zu der Zwischendrehwelle (65) hat, und eine Dämpferhalterung (82) umfasst, welche eine verbindungsseitige Halterung (89) umfasst, welche verbindungsseitige Abschnitte von dem Harz/Kunstharzdämpfer (81) und dem hydraulischen Dämpfer (91) mit dem unteren Verbindungselement (32) verbindet, und eine rahmenseitige Halterung (90) umfasst, welche rahmenseitige Abschnitte von dem Harz/Kunstharzdämpfer (81) und dem Hydraulikdämpfer (91) mit dem Kopfrohr (13) verbindet.

2. Fahrzeug vom Sattelfahrtyp mit zwei Vorderrädern nach Anspruch 1, wobei die Hydraulikdämpfer (91) jeweils auf der linken und der rechten Seite von der Zwischendrehwelle (65) angeordnet sind.

3. Fahrzeug vom Sattelfahrtyp mit zwei Vorderrädern nach Anspruch 2, ferner umfassend Hinterräder (21, 22), welche jeweils auf der linken und der rechten Seite angeordnet sind, und einen Schwenkmechanismus (50), welcher einen hinteren Fahrzeugkörper (20), welcher mit den Hinterrädern (21, 22) versehen ist, und einen vorderen Fahrzeugkörper (10), welcher mit den Vorderrädern (11, 12) versehen ist, schwenkbar verbindet, wobei eine Antriebseinheit (23) an dem hinteren Fahrzeugkörper (20) zwischen den Hinterrädern (21, 22) abgestützt ist, welche auf der linken und der rechten Seite angeordnet sind.

4. Fahrzeug vom Sattelfahrtyp mit zwei Vorderrädern nach Anspruch 3, wobei das obere Verbindungselement (31) ein oberes rechtes Verbindungselement (62) umfasst, welches sich zu dem rechten Armelement (34) hin von dem Kopfrohr (13) erstreckt, und ein oberes linkes Verbindungselement (61) umfasst, welche sich zu dem linken Armelement (33) hin von dem Kopfrohr (13) erstreckt.

5. Fahrzeug vom Sättelfahrtyp mit zwei Vorderrädern nach Anspruch 1, wobei die Zwischendrehwelle (65) durch die rahmenseitige Halterung (90) und ein Dämpfergehäuse (83) von dem Harz/Kunstharzdämpfer (81) gelagert ist und das untere Verbindungselement (32) an der Zwischendrehwelle (65) durch die verbindungsseitige Halterung (89) drehbar gelagert ist.

## Revendications

1. Véhicule de type à selle à deux roues avant comprenant :
un guidon (19) qui est supporté de façon rotative sur un tube avant (13) ;
des roues avant (11, 12) qui sont agencées sur des côtés gauche et droit du véhicule respectivement ;
des organes formant bras gauche et droit (33, 34) qui supportent de façon rotative les roues avant (11, 12) sur les côtés gauche et droit respectivement ;
un mécanisme de liaison (72) qui comprend des organes de liaison (31, 32) qui sont raccordés de façon rotative aux organes formant bras gauche et droit (33, 34) et raccordent les organes formant bras gauche et droit (33, 34) à un côté tube avant (13) ; et
des moyens de transmission de direction (70, 71) qui sont raccordés au guidon (19), et font tourner les organes formant bras gauche et droit (33, 34) selon la rotation du guidon (19), où
le mécanisme de liaison (72) comprend un mécanisme d'amortisseur (80) qui annule un fonctionnement des organes de liaison (31, 32)
les organes de liaison (31, 32) comprennent un organe de liaison supérieur (31) qui raccorde des portions d'extrémité supérieures des organes formant bras gauche et droit (33, 34) et un organe de liaison inférieur (32) qui est positionné sous l'organe de liaison supérieur (31) et raccorde les organes formant bras gauche et droit (33, 34), et
une portion intermédiaire (64) de l'organe de liaison inférieur (32) est supportée de façon rotative sur un arbre rotatif intermédiaire (65) qui est agencé devant le tube avant (13),
**caractérisé en ce que**
le mécanisme d'amortisseur (80) est monté sur la portion intermédiaire (64) de l'organe de liaison inférieur (32) et comprend un amortisseur en résine (81) qui est monté dans la direction de rotation de l'arbre rotatif intermédiaire (65), un amortisseur hydraulique (91) qui comprend un cylindre (96) ayant un axe (96A) approximativement parallèle à l'arbre rotatif intermédiaire (65), et un support d'amortisseur (82) qui comprend un support côté liaison (89) qui raccorde des portions côté liaison de l'amortisseur en résine (81) et l'amortisseur hydraulique (91) à l'organe de liaison inférieur (32), et un support côté cadre (90) qui raccorde des portions côté cadre de l'amortisseur en résine (81) et l'amortisseur hydraulique (91) au tube avant.

2. Véhicule de type à selle à deux roues avant selon la revendication 1, dans lequel les amortisseurs hydrauliques (91) sont agencés sur des côtés gauche et droit de l'arbre de rotation intermédiaire (65) respectivement.

3. Véhicule de type à selle à deux roues avant selon la revendication 2, comprenant en outre des roues arrière (21, 22) qui sont agencées sur des côtés gauche et droit respectivement, et un mécanisme oscillant (50) qui raccorde de façon oscillante un corps de véhicule arrière (20) qui est équipé des roues arrière (21, 22) et un corps de véhicule avant (10) qui est équipé des roues avant (11, 12), dans lequel une unité d'alimentation (23) est supportée sur le corps de véhicule arrière (20) entre les roues arrières (21, 22) qui sont agencées sur des côtés gauche et droit.

4. Véhicule de type à selle à deux roues avant selon la revendication 3, dans lequel l'organe de liaison supérieur (31) comprend un organe de liaison droit supérieur (62) qui s'étend vers l'organe formant bras droit (34) depuis le tube avant (13) et un organe de liaison gauche supérieur (61) qui s'étend vers l'organe formant bras gauche (33) depuis le tube avant (13).

5. Véhicule de type à selle à deux roues avant selon la revendication 1, dans lequel l'arbre rotatif intermédiaire (65) est supporté au moyen du support côté cadre (90) et d'un boîtier d'amortisseur (83) de l'amortisseur en résine (81), et l'organe de liaison inférieur (32) est supporté de façon rotative sur l'arbre rotatif intermédiaire (65) au moyen du support côté liaison (89).
